# FASCICULE DE BREVET EUROPEEN

(11) **EP 0 519 818 B1**
(45) Date de publication et mention de la délivrance du brevet: **27.04.1994**
(21) Numéro de dépôt: 92401688.4
(22) Date de dépôt: 17.06.1992
(51) Int. Cl.: G01G 19/44, G01G 3/12

(54) **Appareil de pesage, à corps d'épreuve portant des jauges de contrainte**
Biegekraftaufnehmer mit Dehnungsmessstreifen für eine Wägevorrichtung
Flexion force sensor with strain gauge for a balance

(30) Priorité: 19.06.1991 FR 9107520
(43) Date de publication de la demande: 23.12.1992
(73) Titulaire: SEB S.A., F-21260 Selongey (FR)
(72) Inventeur: Pitaud, Bernard, F-74000 Annecy (FR)
(74) Mandataire: Rodhain, Claude

(56) Documents cités:
- EP-A- 0 050 708
- EP-A- 0 052 257
- EP-A- 0 296 907
- DE-A- 2 341 310
- DE-A- 2 655 013

## Description

La présente invention concerne un appareil de pesage, notamment à usage domestique tel que pèse-personne ou pèse-aliment.

On connaît notamment selon le brevet français n° 2 554 229 de la demanderesse, un appareil de pesage du type ci-dessus, qui comprend un socle et un plateau récepteur de la charge à peser, parallèle audit socle, un corps d'épreuve s'étendant entre le socle et le plateau dont les extrémités opposées sont fixées rigidement respectivement au socle et au plateau, l'une des faces du corps d'épreuve comportant des jauges de contrainte associées à un circuit électrique, le corps d'épreuve étant en une matière élastique telle qu'elle puisse fléchir sous l'effet de la charge appliquée sur le plateau.

Lorsque le corps d'épreuve fléchit sous l'effet de la charge à peser, les jauges de contrainte travaillent en extension, ce qui modifie leur valeur ohmique et engendre à la sortie du circuit électrique associé, un signal électrique qui est fonction de la charge.

Dans la réalisation décrite dans le brevet français ci-dessus, le corps d'épreuve est un barreau en acier qui est fixé de manière très précise et rigide au plateau et au socle.

Le soin avec lequel est exécuté la fixation du corps d'épreuve au plateau et au socle est déterminant à l'égard de la précision et de la fidélité du pesage.

Cette contrainte affecte toutefois le coût de fabrication de l'appareil de pesage.

La demanderesse a également décrit dans son brevet français n° 2 616 224 un appareil de pesage dans lequel l'ensemble constitué par le plateau, le corps d'épreuve et le socle est réalisé d'une seule pièce par moulage ou par surmoulage.

Toutefois, le retrait de la matière lors du moulage ne permet pas d'obtenir que la face du barreau destinée à recevoir les jauges soit parfaitement plane.

Le but de la présente invention est d'apporter des perfectionnements aux réalisations connues ci-dessus, en créant un appareil de pesage de fabrication peu coûteuse particulièrement adaptée à une fabrication en grande série et permettant d'obtenir un produit ayant des dimensions compactes et parfaitement reproductibles, permettant de réduire les frais d'étalonnage liés aux écarts existant entre les différents appareils, et ayant une face de barreau parfaitement plane et lisse.

L'invention vise ainsi un appareil de pesage comprenant un socle et un plateau récepteur de la charge à peser, parallèle audit socle, un corps d'épreuve s'étendant entre le socle et le plateau dont les extrémités opposées sont fixées rigidement respectivement au socle et au plateau, l'une des faces du corps d'épreuve comportant des jauges de contrainte associées à un circuit électrique, le corps d'épreuve étant en une matière élastique telle qu'elle puisse fléchir sous l'effet de la charge appliquée sur le plateau.

Suivant l'invention, cet appareil est caractérisé en ce que le corps d'épreuve, moulé d'une seule pièce avec le socle et le plateau, est évidé.

Le fait que l'ensemble ci-dessus soit moulé d'une seule pièce permet de simplifier les opérations de montage, d'obtenir des appareils dans lesquels le corps d'épreuve est lié d'une manière parfaitement reproductible au plateau et au socle, ce qui permet de limiter les contrôles ultérieurs.

L'évidement du barreau permet d'alléger le barreau et de faciliter le moulage de celui-ci. En particulier, ces alvéoles solutionnent le problème du retrait de la matière lors du moulage et permettent ainsi d'obtenir que la face du barreau destinée à recevoir les jauges soit parfaitement plane.

L'ensemble constitué par le plateau, le corps d'épreuve et le socle peut ainsi être moulé, en aluminium ou alliage à base d'aluminium, ou en résine thermoplastique, ou en céramique.

Ces matières présentent en effet les propriétés élastiques nécessaires pour réaliser un corps d'épreuve susceptible de travailler en flexion et en torsion, tout en permettant d'obtenir, dans la même opération de moulage, un plateau et un socle suffisamment rigides pour être sensiblement indéformables sous l'effet de la charge à peser.

De préférence, le corps d'épreuve est un barreau allongé comportant plusieurs alvéoles s'ouvrant sur la face opposée à celle portant les jauges de contrainte. L'homme de l'art utilise habituellement des pièces massives mais nous avons constaté qu'il suffit de tenir compte des caractéristiques de la matière lors de l'étalonnage.

Selon une version avantageuse de l'invention, le plateau et/ou le socle comportent une ouverture en regard de la face du corps d'épreuve portant les jauges de contrainte.

Cette ouverture d'accès à l'une des faces du corps d'épreuve permet en outre de rapprocher le corps d'épreuve très près du plateau et/ou du socle, ce qui permet d'obtenir un appareil ayant une très faible hauteur et donc un très faible encombrement.

Selon une version préférée de l'invention, le plateau et le socle sont constitués par des plaques moulées relativement minces rendues sensiblement indéformables par des nervures.

Ces nervures moulées lors de l'opération unique de moulage de l'ensemble, permettent d'obtenir un plateau et un socle indéformables, avec une faible quantité de matière première.

D'autres particularités et avantages de l'invention apparaîtront encore dans la description ci-après.

Aux dessins annexés donnés à titre d'exemples non limitatifs :
- la figure 1 est une vue en coupe longitudinale d'un pèse-personne conforme à l'invention,
- la figure 2 est une vue en plan du dessus du pèse-personne,
- la figure 3 est une vue en coupe suivant le plan III-III de la figure 2,
- la figure 4 est une vue partielle en coupe longitudinale, montrant une réalisation particulière du corps d'épreuve,
- la figure 5 est une vue en coupe suivant le plan V-V de la figure 4,
- la figure 6 est une vue partielle en coupe longitudinale montrant une autre réalisation particulière du corps d'épreuve.

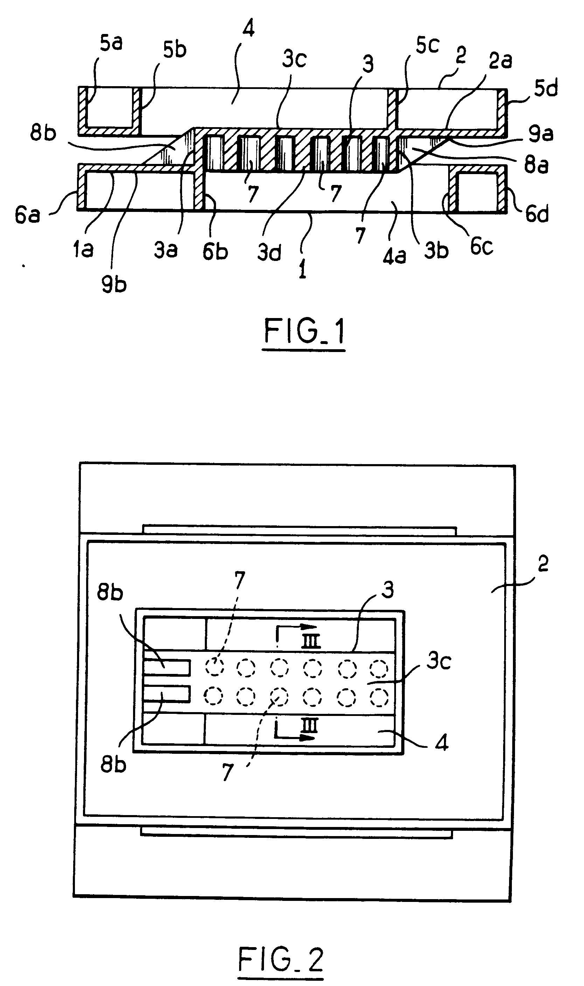

Dans la réalisation des figures 1 et 2, le pèse-personne comprend un socle 1, un plateau 2 récepteur de la charge à peser parallèle audit socle 1 et un corps d'épreuve 3 s'étendant entre le socle 1 et le plateau 2.

Les extrémités opposées 3a, 3b du corps d'épreuve 3 sont fixées rigidement respectivement au socle 1 et au plateau 2. La face supérieure du corps d'épreuve 3 comporte des jauges de contrainte (non représentées) associées à un circuit électrique.

En ce qui concerne la nature et la fixation des jauges, ainsi que les caractéristiques du circuit électrique associé, on se reportera à la description du brevet français 2 554 229

Conformément à la présente invention, l'ensemble constitué par le socle 1, le plateau 2 et le corps d'épreuve 3 est moulé d'une seule pièce, par exemple en résine thermoplastique, céramique ou toute autre matière suffisamment élastique pour qu'elle puisse fléchir légèrement sous l'effet de la charge appliquée sur le plateau 2.

Dans la réalisation représentée, le plateau 2 comporte une ouverture 4 en regard de la face 3c du corps d'épreuve 3 portant les jauges de contrainte.

Cette ouverture 4 permet d'accéder à la face 3c du corps d'épreuve 3 pour mettre en place les jauges sur ce dernier. Cette ouverture 4 permet également de libérer le corps d'épreuve 3 du plateau pour permettre à ce corps d'épreuve de travailler en flexion.

On voit également sur la figure 1 que le plateau 2 et le socle 1 sont constitués par des plaques 2a, 1a relativement minces rendues sensiblement indéformables par des nervures 5a, 5b, 5c, 5d et 6a, 6b, 6c, 6d.

Les nervures 5a, 5b, 5c, 5d du plateau 2 font saillie vers le haut, tandis que les nervures 6a, 6b, 6c, 6d du socle 1 font saillie vers le bas. Grâce à ces nervures, le socle 1 et le plateau 2 ont la rigidité de plaques massives épaisses, tout en étant légères.

Comme indiqué également sur la figure 1, le corps d'épreuve 3 est un barreau allongé s'étendant au milieu du socle et du plateau 2 et comportant plusieurs alvéoles 7 s'ouvrant sur la face 3d opposée à celle portant les jauges de contrainte.

Ces alvéoles 7 facilitent le moulage, en particulier elles évitent le retrait de la matière, ce qui permet d'obtenir que la face 3c destinée à recevoir les jauges reste parfaitement plane et lisse.

On voit d'autre part sur la figure 1 que les faces supérieure 3c et inférieure 3d du corps d'épreuve 3 s'étendent sensiblement dans le prolongement de la face supérieure 2a de la plaque constituant le plateau 2 et de la face inférieure la de la plaque constituant le socle 1, respectivement.

Cette disposition permet d'obtenir une liaison continue entre le plateau 2, le corps d'épreuve 3 et le socle. De plus, elle permet d'obtenir un appareil présentant une épaisseur minimale.

La figure 1 montre en outre que le plateau 2 comporte une nervure de renforcement 5c au droit de l'une (3b) des extrémités du corps d'épreuve 3, tandis que le socle 1 comporte une nervure de renforcement 6b au droit de l'autre extrémité 3a du corps d'épreuve 3. Ces nervures renforcent la liaison entre les extrémités du corps d'épreuve et le plateau ainsi que le socle, en supprimant toute possibilité de flexion, ou autre déformation dans des zones du socle et du plateau adjacentes au corps d'épreuve.

Par ailleurs, les extrémités 3a et 3b du corps d'épreuve 3 sont reliées respectivement à la face inférieure du plateau 2 et à la face supérieure du socle 1 par des nervures 8a, 8b s'étendant dans la direction d'allongement du corps d'épreuve 3.

Ces nervures 8a, 8b ont une forme triangulaire. Le sommet 9 de ces nervures triangulaires 8a, 8b le plus éloigné du corps d'épreuve 3 est situé sensiblement au droit de l'un 5b, 6c des bords de l'ouverture 4, 4a ménagée dans le plateau 2 et dans le socle 1.

Ces nervures triangulaires 8a, 8b ainsi ne risquent pas de venir en butée entre le socle 1 et le plateau 2. Ces nervures 8a, 8b permettent également de rigidifier la liaison entre les extrémités du corps d'épreuve, le socle et le plateau.

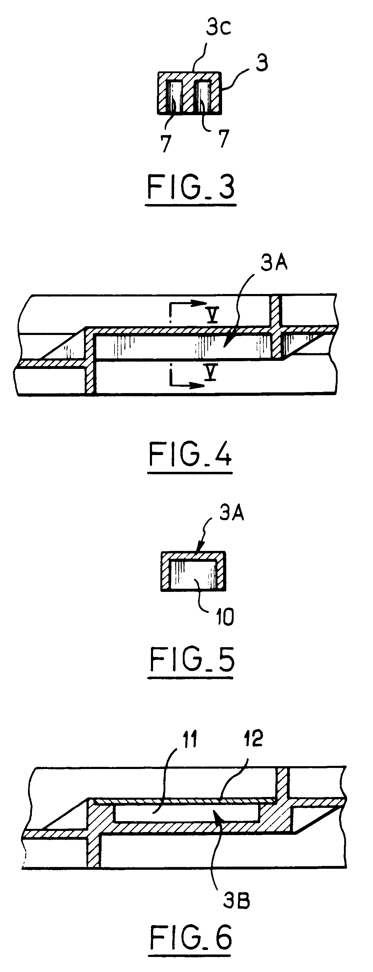

Dans la réalisation de la figure 4, le corps d'épreuve 3A est un barreau allongé de section transversale sensiblement en U (voir figure 5) ouvert sur la face opposée à celle portant les jauges de contrainte.

L'évidement 10 du corps d'épreuve 3A remplit le même rôle que les alvéoles 7 du corps d'épreuve 3.

Dans le cas de la réalisation selon la figure 6, le corps d'épreuve 3B est un barreau allongé comportant un évidement 11 s'étendant sur sensiblement toute la longueur du barreau. Cet évidement 11 est fermé par une plaque 12 fixée au barreau. La plaque 12 ou la partie moulée 3B porte les jauges de contrainte.

Cette plaque 12 est fixée au corps d'épreuve 3B par tout moyen approprié (vis, collage, soudage).

Cette plaque ou lame 12 forme avec le reste du corps d'épreuve 3B un parallélogramme qui se déforme lors de l'application de la charge sur le plateau 2. Cette déformation modifie les valeurs ohmiques des jauges, lesquelles engendrent par l'intermédiaire du circuit électrique associé, un signal électrique qui est fonction de la charge appliquée.

## Revendications

1. Appareil de pesage comprenant un socle (1) et un plateau (2) récepteur de la charge à peser parallèle audit socle, un corps d'épreuve (3) s'étendant entre le socle (1) et le plateau (2) dont les extrémités opposées (3a, 3b) sont solidaires respectivement au socle (1) et au plateau (2), l'une (3c) des faces du corps d'épreuve (3) comportant des jauges de contrainte associées à un circuit électrique, le corps d'épreuve (3) étant en une matière élastique telle qu'elle puisse fléchir sous l'effet de la charge appliquée sur le plateau (2), caractérisé en ce que le corps d'épreuve (3) moulé d'une seule pièce avec le socle (1) et le plateau (2) est évidé.

2. Appareil conforme à la revendication 1, caractérisé en ce que le corps d'épreuve (3) est un barreau allongé comportant plusieurs alvéoles (7) s'ouvrant sur la face (3d) opposée à celle portant les jauges de contrainte.

3. Appareil conforme à la revendication 1, caractérisé en ce que le corps d'épreuve (3A) est un barreau allongé de section transversale sensiblement en U ouvert sur la face opposée à celle portant les jauges de contrainte.

4. Appareil conforme à la revendication 1, caractérisé en ce que le corps d'épreuve (3B) est un barreau allongé comportant un évidement (11) s'étendant sur sensiblement toute la longueur du barreau, cet évidement (11) s'étendant sur sensiblement toute la longueur du barreau, cet évidement (11) étant fermé par une plaque (12) fixée au barreau, le corps d'épreuve (3B) ou la plaque (12) portant les jauges de contrainte.

5. Appareil conforme à la revendication 1, caractérisé en ce que l'ensemble précité est en aluminium ou alliage à base d'aluminium.

6. Appareil conforme à la revendication 1, caractérisé en ce que l'ensemble est moulé dans une résine thermoplastique ou une céramique.

7. Appareil conforme à la revendication 1, caractérisé en ce que le plateau (2) et/ou le socle (1) comportent une ouverture (4, 4a) en regard de la face du corps d'épreuve (3) portant les jauges de contrainte.

8. Appareil conforme à la revendication 1, caractérisé en ce que les faces supérieure et inférieure (3c, 3d) du corps d'épreuve (3) s'étendent sensiblement dans le prolongement de la face supérieure de la face (2a) constituant le plateau (2) et de la face inférieure de la plaque (1a) constituant le socle (1), respectivement.

9. Appareil conforme à la revendication 1, caractérisé en ce que le plateau (2) et le socle (1) sont constitués par des plaques (2a, 1a) relativement minces rendues sensiblement indéformables par des nervures (5a, ... 5d, 6a, ... 6d).

10. Appareil conforme à la revendication 9, caractérisé en ce que les nervures (5a, ... 5d) du plateau (2) font saillie vers le haut, tandis que les nervures (6a, ... 6d) du socle (1) font saillie vers le bas.

11. Appareil conforme à la revendication 9, caractérisé en ce que le plateau (2) comporte une nervure de renforcement (5a) au droit de l'une (3b) des extrémités du corps d'épreuve (3), tandis que le socle (1) comporte une nervure de renforcement (6b) au droit de l'autre extrémité (3a) du corps d'épreuve (3).

12. Appareil conforme à la revendication 9, caractérisé en ce que les extrémités (3a, 3b) du corps d'épreuve (3) sont reliées respectivement à la face inférieure du plateau (2) et à la face supérieure du socle (1) par des nervures (8a, 8b) s'étendant dans la direction d'allongement du corps d'épreuve (3).

13. Appareil conforme à la revendication 12, caractérisé en ce que lesdites nervures (8a, 8b) ont une forme triangulaire, dont le sommet (9a, 9b) le plus éloigné du corps d'épreuve (3) est situé sensiblement au droit de l'un (5b, 6c) des bords de l'ouverture (4, 4a) ménagée dans le plateau (2) et dans le socle (1).

## Patentansprüche

1. Wiegegerät, enthaltend einen Sockel (1) und eine Waagschale (2), die die zu wiegende Last aufnimmt und parallel zu dem Sockel ist, wobei sich zwischen dem Sockel (1) und der Waagschale (2) ein Sensorkörper (3) erstreckt, dessen entgegengesetzte Enden (3a, 3b) mit dem Sockel (1) bzw. der Waagschale (2) fest verbunden sind, wobei eine (3c) der Flächen des Sensorkörpers (3) mit einer elektrischen Schaltung verbundene Dehnmeßstreifen enthält und der Sensorkörper (3) aus elastischem Material besteht, so daß er sich unter einer auf die Waagschale (2) aufgebrachten Last biegen kann, dadurch gekennzeichnet, daß der Sensorkörper (3), welcher in einem Stück mit dem Sockel (1) und der Waagschale (2) geformt ist, hohl ist.

2. Gerät nach Anspruch 1, dadurch gekennzeichnet, daß der Sensorkörper (3) ein länglicher Stab ist, der mehrere Zellen (7) enthält, die zu der Seite (3d) geöffnet sind, die derjenigen entgegengesetzt ist, die die Dehnmeßstreifen trägt.

3. Gerät nach Anspruch 1, dadurch gekennzeichnet, daß der Sensorkörper (3A) ein länglicher Stab mit im wesentlichen U-förmigem Querschnitt ist, der zu der Seite geöffnet ist, die derjenigen entgegengesetzt ist, die die Dehnmeßstreifen trägt.

4. Gerät nach Anspruch 1, dadurch gekennzeichnet, daß der Sensorkörper (3B) ein länglicher Stab ist, der eine Aussparung (11) enthält, die sich im wesentlichen über die ganze Länge des Stabes erstreckt, daß diese Aussparung (11) sich im wesentlichen über die gesamte Länge des Stabes erstreckt, daß diese Aussparung (11) durch eine an dem Stab befestigte Platte (12) geschlossen ist, und daß der Sensorkörper (3B) oder die Platte (12) Dehnmeßstreifen trägt.

5. Gerät nach Anspruch 1, dadurch gekennzeichnet, daß die oben beschriebene Einheit aus Aluminium oder aus einer auf Aluminium basierenden Legierung besteht.

6. Gerät nach Anspruch 1, dadurch gekennzeichnet, daß die Einheit aus einem thermoplastischen Harz oder aus Keramik geformt ist.

7. Gerät nach Anspruch 1, dadurch gekennzeichnet, daß die Waagschale (2) und/ oder der Sockel (1) eine Öffnung (4, 4a) aufweisen, die gegenüber der Fläche des Sensorkörpers (3) ausgebildet ist, die die Dehnmeßstreifen trägt.

8. Gerät nach Anspruch 1, dadurch gekennzeichnet, daß sich die obere bzw. die untere Fläche (3c, 3d) des Sensorkörpers (3) im wesentlichen in der Verlängerung der oberen Fläche der die Waagschale (2) bildenden Fläche (2a) bzw. in der Verlängerung der unteren Fläche der den Sockel (1) bildenden Platte (1a) erstreckt.

9. Gerät nach Anspruch 1, dadurch gekennzeichnet, daß die Waagschale (2) und der Sockel (1) durch relativ dünne Platten (2a, 1a) gebildet sind, die durch Rippen (5a ... 5d, 6a ... 6d) im wesentlichen unverformbar gemacht sind.

10. Gerät nach Anspruch 9, dadurch gekennzeichnet, daß die Rippen (5a ... 5d) der Waagschale (2) nach oben ragen, während die Rippen (6a ... 6d) des Sockels (1) nach unten ragen.

11. Gerät nach Anspruch 9, dadurch gekennzeichnet, daß die Waagschale (2) eine Verstärkungsrippe (5a) auf der Höhe des einen Endes (3b) des Sensorkörpers (3) enthält, während der Sockel (1) eine Verstärkungsrippe (6b) auf der Höhe des anderen Endes (3a) des Sensorkörpers (3) enthält.

12. Gerät nach Anspruch 9, dadurch gekennzeichnet, daß die Enden (3a, 3b) des Sensorkörpers (3) mit der inneren Fläche der Waagschale (2) bzw. der oberen Fläche des Sockels (1) mittels Rippen (8a, 8b) verbunden sind, die sich in der Längsrichtung des Sensorkörpers (3) erstrecken.

13. Gerät nach Anspruch 12, dadurch gekennzeichnet, daß die Rippen (8a, 8b) die Form eines Dreiecks haben, dessen am weitesten vom Sensorkörper (3) entfernte Spitze (9a, 9b) im wesentlichen auf der Höhe von einem der Ränder (5b, 6c) der Öffnungen (4, 4a) liegt, die in der Waagschale (2) und in dem Sockel (1) angebracht sind.

## Claims

1. A weighing device comprising a base (1) and a platform (2) for receiving a load for weighing and parallel to the base, a test body (3) extending between the base (1) and the platform (2) and having opposite ends (3a, 3b) secured to the base (1) and to the plate (2) respectively, one face (3c) of the test body (3) comprising strain gauges associated with an electric circuit, the test body (3) being made of a resilient material which can bend under the load placed on the platform (2), the device being characterised in that the test body (3) is moulded in one piece with the base (1) and the platform (2) and is recessed.

2. A device according to claim 1, characterised in that the test body (3) is an elongate bar formed with a number of recesses (7) opening on to the face (3d) remote from the face bearing the bearing strain gauges.

3. A device according to claim 1, characterised in that the test body (3A) is an elongate bar having a substantially U cross-section and open on the face remote from the face bearing the strain gauges.

4. A device according to claim 1, characterised in that the test body (3B) is an elongate bar having a cavity (11) extending substantially all the way along the bar, the cavity (11) extending over substantially all the length of the bar, the cavity (11) being closed by a plate (12) secured to the platform, and the test body (3B) or the platform (12) bearing the strain gauges.

5. A device according to claim 1, characterised in that the aforementioned assembly is of aluminium or aluminium-based alloy.

6. A device according to claim 1, characterised in that the assembly is of moulded thermoplastic resin or ceramic.

7. A device according to claim 1, characterised in that the platform (2) and/or the base (1) has an aperture (4, 4a) opposite the face of the test body (3) bearing the strain gauges.

8. A device according to claim 1, characterised in that the top and bottom faces (3c, 3d) of the test body (3) extend substantially in line with the top face of the face (2a) constituting the platform (2) and the bottom face of the plate (1a) constituting the base (1), respectively.

9. A device according to claim 1, characterised in that the platform (2) and the base (1) are made up of relatively thin plates (2a, 1a) made substantially non-deformable by ribs (5a, ... 5d, 6a ... 6d).

10. A device according to claim 9, characterised in that the ribs (5a, ... 5d) of the platform (2) project upwards whereas the ribs (6a, ... 6d) of the base (1) project downwards.

11. A device according to claim 9, characterised in that the platform (2) comprises a reinforcing rib (5a) in line with one end (3b) of the test body (3), whereas the base (1) has a reinforcing rib (6b) in line with the other end (3a) of the test body (3).

12. A device according to claim 9, characterised in that the ends (3a, 3b) of the test body (3) are connected to the bottom face of the platform (2) and the top face of the base (1) by respective ribs (8a, 8b) extending in the longitudinal direction of the test body (3).

13. A device according to claim 12, characterised in that the ribs (8a, 8b) have a triangular shape, the corner (9a, 9b) furthest from the test body (3) being substantially in line with an edge (5b, 6c) of the opening (4, 4a) formed in the platform (2) and in the base (1).
